(19) **Europäisches Patentamt European Patent Office Office européen des brevets**

(11) **EP 2 241 870 B1**

(12) **EUROPEAN PATENT SPECIFICATION**

(45) Date of publication and mention of the grant of the patent:
**02.09.2015 Bulletin 2015/36**

(51) Int Cl.:
***G01K 1/14*** *(2006.01)*

(21) Application number: **09005449.5**

(22) Date of filing: **17.04.2009**

(54) **An assembly comprising a substrate and a sensor pressed against the substrate**

*Anordnung mit einem Substrat und einem gegen das Substrat gepressten Sensor*

*Ensemble comportant un substrat et capteur appuyé contre le substrat*

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**20.10.2010 Bulletin 2010/42**

(73) Proprietor: **Sensirion AG**
**8712 Stäfa (CH)**

(72) Inventors:
  • **Mayer, Felix**
  **8712 Stäfa (CH)**
  • **Graf, Markus**
  **8005 Zürich (CH)**
  • **Hunziker, Werner**
  **8712 Stäfa (CH)**

(74) Representative: **Sutter, Kurt et al**
**E. Blum & CO. AG**
**Vorderberg 11**
**8044 Zürich (CH)**

(56) References cited:
**EP-A- 1 936 342**          **WO-A-99/12393**
**DE-A1-102007 042 694**

**Description**

Technical Field

The invention relates to an assembly comprising a substrate and a temperature sensor pressed against the substrate. In particular, it relates to an assembly for the measurement of a temperature-dependent parameter comprising a substrate, a holder connected to the substrate, and a sensor device having a sensor in a package. The assembly further comprises a spring member backed by the holder and being elastically compressed for pressing the sensor device against the substrate in order to measure the temperature-dependent parameter of the substrate. The invention also relates to a method for manufacturing such an assembly.

Background Art

In various applications, the temperature of a substrate, or a parameter dependent thereon, needs to be measured. Typically, this is achieved by pressing a suitable sensor against the substrate and by providing a suitable mechanism for keeping up the pressure.

EP 1 700 724 describes an example of such an assembly in the form of an fogging detector for a windshield. In that example, the substrate is formed by the windshield. A holder is e.g. glued to the windshield. A sensor device comprising a humidity and a temperature sensor in a package (housing) is pressed against the windshield by means of a spring member. At one end, the spring member is backed by the holder, while the other end of the spring member presses against the sensor device. The spring member is elastically compressed to maintain constant pressure and thus keeping the sensor device in thermal contact with the windshield.

This type of design is, however, difficult to assemble as it consists of a large number of different parts.

EP 1 936 342 A1 discloses an arrangement with a temperature sensor, which is attached on a circuit carrier, positioned in an area of a front side of the circuit carrier in proximity to a surface to be measured. An additional circuit carrier and the circuit carrier are connected by two connecting units, i.e. metallic springs, where the arrangement is positioned on the surface to be measured such that the circuit carrier with the front side is pressed against a surface. The front side of the circuit carrier is smoothly implemented and is partially metallized.

Disclosure of the Invention

The problem to be solved by the present invention is therefore to provide an assembly of this type that can be assembled more easily.

This problem is solved by the assembly of claim 1. Accordingly, the sensor device comprises a metal structure having an internal section cast into the package of the device and an external section extending from the package, with the external section forming at least part of the spring member.

Hence, the invention is based on the understanding that a metal structure partially embedded in the package of the sensor device can be used as a spring. This obviates the need for a separate spring member or, at least, allows to use a spring member of simpler design.

Advantageously, the metal structure forms at least one lead electrically connected to the sensor for connecting the sensor to external circuitry. In other words, the metal structure is formed by the lead frame of the sensor device.

In a particularly advantageous embodiment, the external section comprises at least one tongue with a first section having a first cross section (W1 x T1) and a second section having a second cross section (W2 x T2), with said first cross section being larger than said second cross section. In most cases, it will be advantageous that the tongue is curved at least in the second section, which allows to reduce the stiffness of the tongue.

In another advantageous embodiment, the external section comprises at least one tongue, which is in a bent state in the final assembly. The tongue is a strip of metal which, when being in its stretched, non-bent state, extends in a plane and has at least one curved section within said plane. This type of tongue can be manufactured by suitably shaping the lead frame of the device.

A method for manufacturing the above assembly advantageously comprises the steps of

providing said sensor device with said metal structure in a non-bent state,

bending said external section of said metal structure,

placing said sensor device between said holder and said substrate with said external section being elastically compressed for pressing said sensor device against said substrate.

Advantageously, the metal structure comprises at least one tongue, as mentioned above. In the non-bent state of the metal structure, the tongue extends in a plane and has at least one curved section within said plane. This type of tongue can e.g. be manufactured by providing a lead frame that contains a plurality of such tongues, with each tongue already shaped to comprise said curved section. The device is formed by mould casting at least one package around or against the lead frame.

Other advantageous embodiments are listed in the dependent claims as well as in the description below.

Brief Description of the Drawings

The invention will be better understood and objects other than those set forth above will become apparent from the following detailed description thereof. Such description makes reference to the annexed drawings, wherein:

Fig. 1 is a sectional view of a first embodiment of the assembly,

Fig. 2 is a side view of the sensor device of the assembly of Fig. 1,

Fig. 3 is a top view of the sensor device of the assembly of Fig. 1,

Fig. 4 is a sectional view of the sensor device of the assembly of Fig. 1 prior to bending its metal structure,

Fig. 5 is a top view of a sensor device according to a second embodiment of the invention prior to bending its metal structure,

Fig. 6 is a sectional view of the sensor device of Fig. 3 with bent metal structure

Fig. 7 is a side view of the sensor device of Fig. 6, and

Fig. 8 is a sectional view of a third embodiment of the assembly.

Modes for Carrying Out the Invention

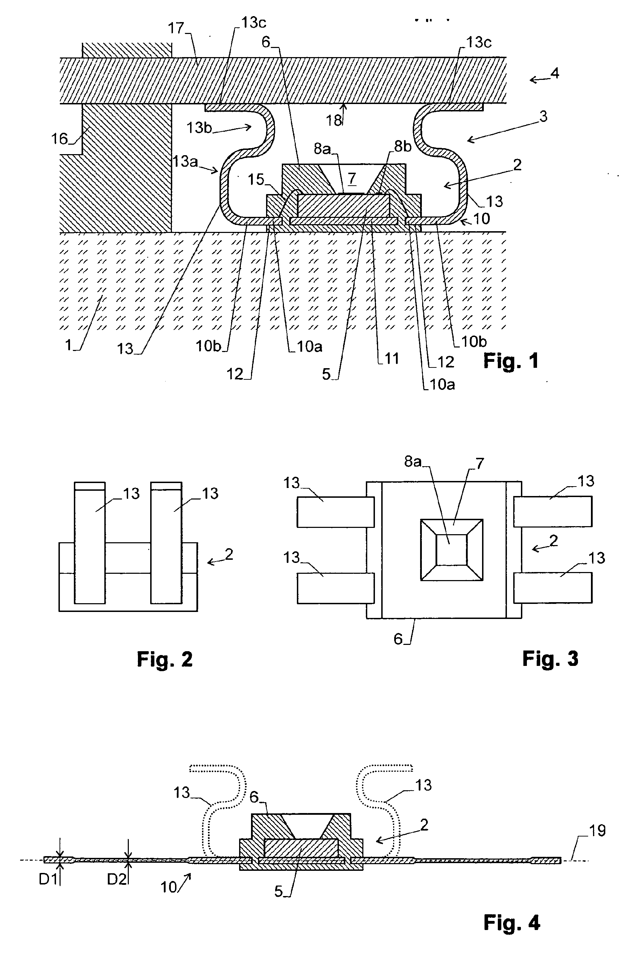

Figs. 1 - 3 show a first embodiment of an assembly according to the invention. It comprises a substrate 1, a sensor device 2, a spring member 3 and a holder 4.

Substrate 1 is any suitable substrate whose temperature is to be determined by a temperature sensor in sensor device 2. In an advantageous embodiment, substrate 1 is the windshield of a vehicle.

Sensor device 2 is a device comprising a temperature sensor and, optionally, further sensors.

In an advantageous embodiment, sensor device 2 comprises a temperature sensor as well as a humidity sensor. This type of sensor device allows e.g. to detect a risk of fogging of substrate 1, which can e.g. be used for generating a fogging alert in a vehicle, as described in EP 1 700 724.

Sensor device 2 comprises a semiconductor chip 5 cast into a housing or package 6 of plastics. In the embodiment of Figs. 1 - 3, a window 7 is provided in housing 6 for providing access to a humidity sensor 8a integrated on semiconductor chip 5. Temperature sensor 8b is also part of semiconductor chip 5.

In addition, an integral, i.e. single-piece, metal structure 10 is partially cast into package 6. Metal structure 10 comprises an internal section 10a arranged within package 6 and an external section 10b extending from package 6.

In the embodiment of Fig. 1 - 3, internal section 10a comprises a die pad 11 as well as internal ends 12 of the leads 13 of the detector device, while external section 10b comprises the external parts of the leads 13. The external parts of the leads 13 have the shape of tongues extending from package 6. The ends 12 of the leads 13 are connected to semiconductor chip 5 and thereby to the sensors and circuitry thereon by means of bond wires 15 and can be used to connect the same to external circuitry.

In the embodiment of Figs. 1 - 3, holder 4 comprises a housing 16, e.g. of plastics, which is attached to substrate 2, e.g. by gluing. Housing 16 supports a printed circuit board or PCB 17 carrying conducting leads and circuit components (not shown) and being arranged substantially parallel to substrate 1.

The leads or tongues 13 formed by external section 10b are advantageously soldered to PCB 17 of holder 4 in order to form an electrical as well as a mechanical connection.

Fig. 1 shows the assembly in fully assembled form. In this state, external section 10b of metal structure 10 is elastically deformed by PCB 17 of housing 4, which presses it towards substrate 1. Thus, sensor device 2 is pressed against substrate 1 and kept in good thermal contact therewith.

Each lead or tongue 13 of the embodiment of Figs. 1 - 3 comprises a plurality of curved sections 13a, 13b, with at least two subsequent curved sections being curved in opposite direction.

In this context, the "direction" of the curvature of a tongue is defined as follows: It is assumed that the tongue has a center line describing a path extending through three-dimensional space with a unit tangential vector **T** defined at each point on the path. The direction **N** of the curvature is defined as the unit vector

$$\mathbf{N} = (d\mathbf{T}/ds) \ / \ |d\mathbf{T}/ds|$$

with $d\mathbf{T}/ds$ being the derivative of tangential vector **T** with respect the position s on the path, as defined by the Frenet-Serret formulas.

The expression that the tongue comprises "at least two subsequent curved sections curved in opposite directions" expresses that the binormal unit vectors **B** = **T** x **N** of the two sections are substantially anti-parallel to each other.

In other words, the two sections describe a meandering path.

A tongue of such shape has improved elasticity as compared to a straight tongue.

As can be seen from Fig. 1, each lead or tongue 13 comprises a straight end 13c that extends parallel to and is pushed against a lower surface 18 of PCB 17 of holder 4. Advantageously, these ends 13c are attached to PCB 17, e.g. by soldering.

As mentioned above, metal structure 10 is advantageously formed by a section of the lead frame that was used when manufacturing detector device 3. Such lead frames are well known in the art and typically serve to form the leads or pins as well as the die pad 11 of integrated circuit devices. Prior to packaging the semiconductor chip, the same is attached to die pad 11 and electrically connected to the leads of the lead frame by means of the bond wires 15. Then package 6 is cast around semiconductor chip 5, thereby embedding the chip, the internal section 10a of the metal structure 10 and the bond wires 15. Thereafter, the lead frame is cut, thereby separating the individual devices.

After casting package 6 and separating the individual lead frame sections, the metal structure is typically still flat, lying at least mostly parallel to a "lead frame plane" 19 as shown in Fig. 4. Thereafter, the leads or tongues 13 of external section 10b are plastically bent to extend transversally to lead frame plane 19, as shown in dotted lines in Fig. 4.

Now, sensor device 2 can e.g. be attached to PCB 17 of holder 4, and then holder 4 is mounted to substrate 1. The distance between PCB 17 and substrate 1 is slightly smaller than the distance of the bottom side of sensor device 2 from PCB 17, thus that, when mounting holder 4 to substrate 1, the leads 13 are slightly compressed.

In order to ensure that sensor device 2 lies flatly and smugly against substrate 1, it is advantageous to provide at least two leads or tongues 13 extending from opposite sites of package 6, or, even better, to provide at least four leads or tongues 13, which are bent to extend transversally to lead frame plane 19.

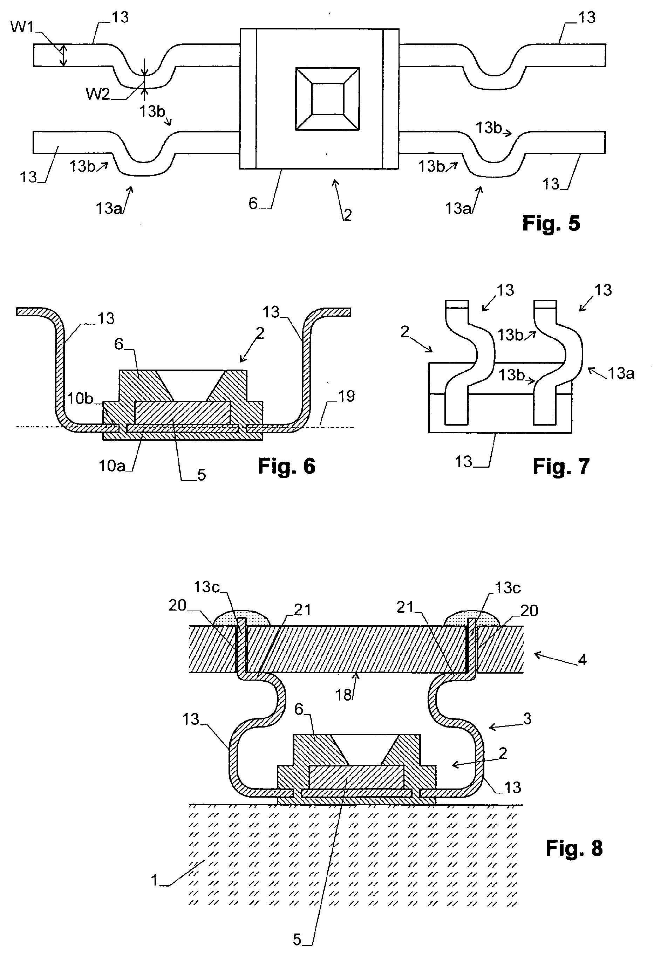

Figs. 5 - 7 show the sensor device of a second embodiment of the invention. In Fig. 5, the device is shown with its tongues 13 in a state prior to bending, i.e. in a stretched, non-bent state. In that state, the side view of the device is identical to the one of Fig. 4, and the tongues 13 lie within a plane, namely lead frame plane 19. They have curved sections 13a, 13b that lie within plane 19, i.e. the binormal vectors **B** of the curved sections 13a, 13b of the tongues 13 extend perpendicularly to lead frame plane 19.

Prior to being mounted in the assembly, the tongues 13 are bent out of lead frame plane 19, as shown in Figs. 6 and 7.

In addition, and as it can also be seen in Figs. 5 and 7, the width of the tongues 13 is non-uniform. In the embodiment as shown, the tongues 13 have a first width W1 in their straight sections and a second width W2 in their curved sections 13a, 13b, with W1 > W2. By providing tongues having a first width W1 in a straight section and a second, different width W2 in a curved section, it becomes possible to adapt the stiffness, i.e. elasticity of the tongues to the requirements of the assembly. Depending on the desired properties, W2 can also be larger than W1.

In the embodiment of Figs. 5 - 7, the varied width W1, W2 is the width of the tongues in a direction parallel to lead frame plane 19 when the tongues are in their non-bent state. Alternatively, or additionally thereto, the thickness of the tongues in a direction perpendicular to lead frame plane 19 can be varied. This is illustrated schematically in Fig. 4, where the leads or tongues 13 in their stretched state are shown to have thinner and thicker sections with thickness D1 and D2, respectively, with D1 > D2. At least one of these sections will be a curved section of the tongue in the final assembly. Advantageously, at least the thinner section will form a curved section of the tongue, which allows to make the tongue more flexible.

In more general terms, the tongues 13 advantageously have non-uniform cross section. In particular, they comprise at least a first section having a first cross section L1 x W1, and a second section having a second, smaller cross section L2 x W2. Advantageously, the tongue is curved in the second section.

In addition, advantageously and in contrast to prior art tapered tongues, the first section is at a location on said tongue that is at a larger distance (as measured along said tongue) than the second section. (In other words, the thinner section does not form the end of the tongue.)

In this case, the curvatures can be formed when structuring the lead frame, as shown in Fig. 5, instead of forming them when bending the leads or tongues 13.

Fig. 8 shows a final embodiment of the invention, which differs from the one of Fig. 1 in that the ends 13c of the tongues or leads 13 form pins that are inserted into openings 20 in surface 18 of PCB 17, where they are e.g. anchored by soldering. To provide a defined anchoring position and to prevent the solder point from being damaged by excessive elastic forces, the tongues or leads 13 further form a shoulder 21 which rests against the surface 18.

Notes:

In the embodiments shown so far, spring member 3, which is backed by holder 4 and presses sensor device 2 against substrate 1, is fully formed by metal structure 10. It must be noted, though, that part of spring member 3 may also be formed by separate elements which assist metal structure 10 in urging sensor device 2 against substrate 1.

External section 10b of metal structure 10 of the above embodiments has two functions: It forms leads that allow to electrically connect semiconductor chip 5 to external circuitry, and the same leads also act as springs for elastically pushing sensor device 2 against substrate 1. It must be noted, though, that external section 10b of metal structure 10 can comprise separate parts for these two functions. For example, not all of the metal tongues formed by external section 10b have to be leads, some of them may only act as springs without any electrical function.

As mentioned, to change the stiffness of the leads or tongues 13 and adapt them to their role as spring elements, they can be shaped as desired, e.g. by being thinned in the curved sections 13a, 13b using etching, punching or embossing technology.

As mentioned, sensor device 2 does not necessarily have to be a temperature sensor in the strict sense, i.e. a sensor that explicitly measures the temperature of substrate 2. It may also be a sensor measuring another parameter that depends on the temperature of substrate 1, such as a fogging sensor as described above.

**Claims**

1. An assembly for the measurement of a temperature-dependent parameter comprising
   a substrate (1),
   a holder (4) connected to said substrate (1), and
   a sensor device (2) comprising a sensor (8b) measuring said temperature-dependent parameter,
   a spring member (3) backed by said holder (4), wherein said spring member (3) is elastically compressed for pressing said sensor device (2) against said substrate (1) in order to measure said temperature-dependent parameter,
   wherein said sensor device (2) comprises a metal structure (10) having an internal section (10a) cast into said package (6) and an external section (10b) extending from said package (6), wherein said external section (10b) forms at least part of said spring member (3) **characterized in that**

   - the sensor device (2) further comprises:

     -- a semiconductor chip (5) on which the sensor (8b) is integrated, and
     -- a package (6) of plastics embedding the semiconductor chip (5),

   - the metal structure (10) being in the form of a lead frame.

2. The assembly of claim 1 wherein said spring member (3) is formed by said external section (10b).

3. The assembly of any of the preceding claims wherein said metal structure (10) forms at least one tongue (13) electrically connected to said sensor (8b) for connecting said sensor (8b) to external circuitry.

4. The assembly of claim 3 wherein said tongue (13) is electrically connected to said holder (4).

5. The assembly of claim 4, wherein said holder (4) comprises a printed circuit board (17) extending substantially parallel to said substrate (1), and wherein said tongue (13) is soldered to said printed circuit board (17).

6. The assembly of any of the preceding claims wherein said internal section (10a) is arranged parallel to a lead frame plane (19), and wherein said external section (10b) comprises at least one tongue (13) that is bent to extend transversally to said lead frame plane (19).

7. The assembly of claim 6 having at least two tongues (13) extending from opposite sides of said package (6) and being bent to extend transversally to said lead frame plane (19).

8. The assembly of any of the claims 6 or 7 having at least four tongues (13) bent to extend transversally to said lead frame plane (19).

9. The assembly of any of the preceding claims wherein said external section comprises at least one tongue (13) with a first section having a first cross section ($W1 \times T1$) and a second section having a second cross section ($W2 \times T2$), with said first cross section being larger than said second cross section, and in particular wherein said tongue (13) is curved in said second section.

10. The assembly of claim 9 wherein said first section is at a larger distance on said tongue (13) from said package (6) than said second section.

11. The assembly of any of the preceding claims wherein said external section (10b) comprises at least one tongue (13) in a bent state, which tongue (13), when being in a stretched, non-bent state, extends in a plane (19) and has at least one curved section (13a, 13b) within said plane (19).

12. The assembly of any of the preceding claims wherein said external section (10b) comprises at least one tongue (13) having a plurality of curved sections (13a, 13b), with at least two subsequent curved sections (13a, 13b) curved in opposite directions.

13. The assembly of any of the preceding claims wherein said external section (10b) is soldered to said holder (4).

14. The assembly of any of the preceding claims wherein said external section (10b) comprises at least one pin inserted into an opening (20) in said holder (4), and in particular wherein said external section (10b) further comprises a shoulder (21) extending transversally to said pin and resting against a surface (18) of said holder (4), wherein said opening (20) is located in said surface (18).

15. The assembly of any of the preceding claims wherein said external section (10b) comprises at least one tongue (13) having an end (13c) extending parallel to and being pushed against a surface (18) of said holder (4).

16. The assembly of any of the preceding claims wherein said support is a windshield and said sensor device (2) further comprises a humidity sensor (8a).

17. A method for manufacturing the assembly of any of the preceding claims comprising the steps of
    providing said sensor device (2) with said metal structure (10) in a non-bent state,
    bending said external section (10b) of said metal structure (10),
placing said sensor device (2) between said holder (4) and said substrate (1) with said external section (10b) being elastically compressed for pressing said sensor device (2) against said substrate (1).

18. The method of claim 17 wherein in said non-bent state, said external section (10b) comprises at least one tongue, which tongue (13), wherein in said non-bent state of said metal structure (10), said tongue (13) extends in a plane (19) and has at least one curved section (13a, 13b) within said plane (19), and in particular wherein said device is formed by mould casting at least one package (6) around or against said lead frame, wherein said lead frame comprises said tongue (13) with said curved section (13a, 13b).

**Patentansprüche**

1. Eine Anordnung zum Messen eines temperaturabhängigen Parameters, enthaltend
ein Substrat (1),
einen Halter (4), welcher mit dem Substrat verbunden ist,
ein Sensorbauteil (2), enthaltend einen Sensor (8b), welcher den temperaturabhängigen Parameter misst, und
eine Feder (3), welche durch den Halter (4) gespannt wird, wobei die Feder (3) elastisch zusammengedrückt wird, so dass das Sensorbauteil (2) gegen das Substrat (1) gepresst wird, zum Messen des temperaturabhängigen Parameters,
wobei das Sensorbauteil (2) eine Metallstruktur (10) mit einem inneren Abschnitt (10a), welcher in das Gehäuse (6) gegossen ist, und einem äusseren Abschnitt (10b), welcher sich von dem Gehäuse aus erstreckt, enthält, wobei der äussere Abschnitt (10b) mindestens einen Teil der Feder (3) formt, **dadurch gekennzeichnet dass**
das Sensorbauteil(2)

   - einen Halbleiterchip (5), auf welchem der Sensor (8b) integriert ist, und
   - ein Gehäuse (6) aus Plastik, zum Einbetten des Halbleiterchips (5), enthält und

die Metallstruktur (10) die Form eines Leiterrahmens hat.

2. Die Anordnung nach Anspruch 1, wobei die Feder (3) durch den äusseren Abschnitt (10b) geformt ist.

3. Die Anordnung nach einem der vorhergehenden Ansprüche, wobei die Metallstruktur (10) mindestens eine Lasche (13) formt, welche elektrisch mit dem Sensor (8b) verbunden ist zum Verbinden des Sensors (8b) mit externer Elektronik.

4. Die Anordnung nach Anspruch 3, wobei die Lasche (13) elektronisch mit dem Halter (4) verbunden ist.

5. Die Anordnung nach Anspruch 4, wobei der Halter (4) eine gedruckte Leiterplatte (17) enthält, welche sich im Wesentlichen parallel zum Substrat (1) erstreckt, und wobei die Lasche (13) an die Leiterplatte (17) gelötet ist.

6. Die Anordnung nach einem der vorhergehenden Ansprüche, wobei der innere Abschnitt (10a) parallel zu einer Ebene (19) eines Leiterrahmens angeordnet ist und wobei der äussere Abschnitt (10b) mindestens eine Lasche (13) enthält, welche so gebogen ist, dass sie quer zur Ebene (19) des Leiterrahmens verläuft.

7. Die Anordnung nach Anspruch 6, welche mindestens zwei Laschen (13) hat, welche sich von gegenüberliegenden Seiten des Gehäuses (6) erstrecken und welche so gebogen sind, dass sie sich quer zur Ebene (19) des Leiterrahmens (19) erstrecken.

8. Die Anordnung nach einem der Ansprüche 6 oder 7, welche mindestens vier Laschen (13) enthält, welche so gebogen sind, dass sie sich quer zur Ebene des Leiterrahmens (19) erstrecken.

9. Die Anordnung nach einem der vorhergehenden Ansprüche, wobei der äussere Abschnitt mindestens eine Lasche (13) mit einem ersten Abschnitt mit einem ersten Querschnitt (W1 x T1) und einem zweiten Abschnitt mit einem zweiten Querschnitt (W2 x T2) enthält, wobei der erste Querschnitt grösser ist als der zweite Querschnitt und insbesondere, wobei die Lasche (13) im zweiten Abschnitt gekrümmt ist.

10. Die Anordnung nach Anspruch 9, wobei der erste Abschnitt auf der Lasche (13) mit einem grösseren Abstand zum Gehäuse (6) angeordnet ist als der zweite Abschnitt.

11. Die Anordnung nach einem der vorhergehenden Ansprüche, wobei der äussere Abschnitt (10b) mindestens eine Lasche (13) in einem gebogenen Zustand enthält, wobei die Lasche (13), wenn sie in einem gestreckten, nicht gebogenen Zustand ist, sich in eine Ebene (19) erstreckt und innerhalb der Ebene (19) mindestens einen gekrümmten Abschnitt (13a, 13b) hat.

12. Die Anordnung nach einem der vorhergehenden Abschnitte, wobei der äussere Abschnitt (10b) mindestens eine Lasche (13) mit einer Vielzahl von gekrümmten Abschnitten (13a, 13b) enthält, mit mindestens zwei aufeinanderfolgenden gekrümmten Abschnitten (13a, 13b), welche in entgegengesetzten Richtungen gekrümmt sind.

**13.** Die Anordnung nach einem der vorhergehenden Ansprüche, wobei der äussere Abschnitt (10b) an den Halter (4) gelötet ist.

**14.** Die Anordnung nach einem der vorhergehenden Ansprüche, wobei der äussere Abschnitt (10b) mindestens einen Bolzen in einer Öffnung (20) im Halter (4) enthält und insbesondere, wobei der äussere Abschnitt (10b) zusätzlich eine Schulter (21) enthält, welche sich quer zum Bolzen erstreckt und gegen eine Oberfläche (18) des Halters (4) anliegt, wobei die Öffnung (20) in der Oberfläche (18) angeordnet ist.

**15.** Die Anordnung nach einem der vorhergehenden Ansprüche, wobei der äussere Abschnitt (10b) mindestens eine Lasche (13) mit einem Ende (13c) enthält, welches sich parallel zu einer Oberfläche (18) des Halters (4) erstreckt und welches gegen die Oberfläche (18) gedrückt wird.

**16.** Die Anordnung nach einem der vorhergehenden Ansprüche, wobei der Träger eine Windschutzscheibe ist und das Sensorbauteil(2) zusätzlich einen Feuchtesensor (8a) enthält.

**17.** Eine Methode zur Herstellung der Anordnung nach einem der vorhergehenden Ansprüche, die Schritte enthaltend
Bereitstellen des Sensorbauteils (2) mit einer Metallstruktur (10) in einem nicht gebogenen Zustand,
Biegen des äusseren Abschnitts (10b) der Metallstruktur (10),
Platzieren des Sensorbauteils (2) zwischen dem Halter (4) und dem Substrat (1), wobei der äussere Abschnitt (10b) elastisch zusammengedrückt ist, zum Pressen des Sensorbauteils (2) gegen das Substrat (1).

**18.** Die Methode nach Anspruch 17, wobei der äussere Abschnitt (10b) im nicht gebogenen Zustand mindestens eine Lasche enthält, wobei sich die Lasche (13) im nicht gebogenen Zustand der Metallstruktur (10) in eine Ebene (19) erstreckt und mindestens einen gekrümmten Abschnitt (13a, 13b) innerhalb der Ebene (19) hat und insbesondere, wobei das Bauteil mittels Druckguss mindestens eines Gehäuses (6) um den Leiterrahmen herum oder gegen den Leiterrahmen geformt wird, wobei der Leiterrahmen die Lasche (13) mit dem gekrümmten Abschnitt (13a, 13b) enthält.

**Revendications**

**1.** Une assemblée pour la mesure d'un paramètre dépendant de température comprenant
un substrat (1),
un support (4) connecté audit substrat (1), et
un dispositif capteur (2) comprenant un capteur (8b) mesurant ledit paramètre dépendant de température,
un membre de ressort (3) porté par ledit support (4), ledit membre de ressort (3) étant comprimé élastiquement afin de pressuriser ledit dispositif de capteur (2) contre ledit substrat (1) afin de mesurer ledit paramètre dépendant de température,
ledit dispositif de capteur (2) comprenant une structure métallique (10) ayant une section interne (10a) moulée dans ledit empaquetage (6) et une section externe (10b) s'étendant dudit empaquetage (6), ladite section externe (10b) formant au moins une partie du membre de ressort (3), **caractérisée en ce que**

- le dispositif de capteur (2) comprend en outre:

-- une puce semi-conductrice (5) sur laquelle le capteur (8b) est intégré, et
-- un empaquetage (6) des plastiques incorporant la puce semi-conductrice (5),

- la structure métallique (10) étant en forme de cadre conducteur.

**2.** L'assemblée selon la revendication 1, ledit membre de ressort (3) étant formé par ladite section externe (10b).

**3.** L'assemblée selon l'une des revendications précédentes, ladite structure métallique (10) formant au moins une languette (13) connectée électriquement avec ledit capteur (8b) afin de connecter ledit capteur (8b) à des circuits externes.

**4.** L'assemblée selon la revendication 3, ladite languette (13) étant électriquement connectée audit support (4).

**5.** L'assemblée selon la revendication 4, ledit support (4) comprenant une carte de circuit imprimée (17) s'étendant essentiellement parallèle audit substrat (1), et ladite languette (13) étant soudée à ladite carte de circuit imprimée (17).

**6.** L'assemblée selon l'une des revendications précédentes, ladite section interne (10a) étant arrangée parallèle à un plan de cadre conducteur (19), et ladite section externe (10b) comprenant au moins une languette (13) courbée afin de s'étendre transversalement par rapport audit plan de cadre conducteur (19).

**7.** L'assemblée selon la revendication 6, ayant au moins deux languettes (13) s'étendant des côtes opposées dudit empaquetage (6) et étant courbées afin de s'étendre transversalement par rapport audit plan de cadre conducteur (19).

8. L'assemblée selon l'une des revendications 6 ou 7, ayant au moins quatre languettes (13) courbées afin de s'étendre transversalement par rapport audit plan de cadre conducteur (19).

9. L'assemblée selon l'une des revendications précédentes, ladite section externe comprenant au moins une languette (13) avec une première section ayant une première coupe transversale (W1 x T1) et une deuxième section ayant une deuxième coupe transversale (W2 x T2), la première coupe transversale étant plus large que la deuxième coupe transversale, et particulièrement ladite languette (13) étant courbée dans ladite deuxième section.

10. L'assemblée selon la revendication 9, ladite première section étant plus éloignée dudit empaquetage (6) sur ladite languette (13) que la deuxième languette.

11. L'assemblée selon l'une des revendications précédentes, ladite section externe (10b) comprenant au moins une languette (13) dans un état courbé, la languette (13) s'étendant dans un plan (19) et ayant au moins une section courbée (13a, 13b) dans ledit plan (19) quand elle est dans un état tendu et non-courbé.

12. L'assemblée selon l'une des revendications précédentes, ladite section externe (10b) comprenant au moins une languette (13) ayant une pluralité de sections courbées (13a, 13b), avec au moins deux consécutives sections courbées (13a, 13b) dans des directions opposées.

13. L'assemblée selon l'une des revendications précédentes, ladite section externe (10b) étant soudée audit support (4).

14. L'assemblée selon l'une des revendications précédentes, ladite section externe (10b) comprenant au moins une broche insérée dans une ouverture (20) dans ledit support (4), et particulièrement ladite section externe (10b) comprenant en outre une épaule (21) s'étendant transversalement par rapport à ladite broche et s'appuyant contre une surface (18) dudit support (4), ladite ouverture (20) étant située dans ladite surface (18).

15. L'assemblée selon l'une des revendications précédentes, ladite section externe (10b) comprenant au moins une languette (13) ayant une extrémité (13c) s'étendant parallèle par rapport à et étant poussée contre une surface (18) dudit support (4).

16. L'assemblée selon l'une des revendications précédentes, ledit support étant un pare-brise et ledit dispositif de capteur (2) comprenant en outre un capteur d'humidité (8a).

17. Un procédé de fabrication de l'assemblée selon l'une des revendications précédentes comprenant les étapes de

prévoir ladite structure métallique (10) dans un état non-courbé pour ledit dispositif de capteur (2), courber ladite section externe (10b) de ladite structure métallique (10), placer ledit dispositif de capteur (2) entre ledit support (4) et ledit substrat (1) avec ladite section externe (10b) étant élastiquement comprimée afin de pousser ledit dispositif de capteur (2) contre ledit substrat (1).

18. Le procédé selon la revendication 17, ladite section externe (10b) comprenant au moins une languette dans ledit état non-courbé, la languette (13), dans ledit état non-courbé de ladite structure métallique (10) ladite languette (13) s'étendant dans un plan (19) et ayant au moins une section courbée (13a, 13b) dans ledit plan (19), et particulièrement ledit dispositif étant formé par moulage d'au moins un empaquetage (6) autour ou contre ledit cadre de conducteur, ledit cadre de conducteur comprenant ladite languette (13) avec ladite section courbée (13a, 13b).

**Fig. 1**

**Fig. 2**

**Fig. 3**

**Fig. 4**

**Fig. 5**

**Fig. 6**

**Fig. 7**

**Fig. 8**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1700724 A
- EP 1936342 A1